# EUROPEAN PATENT APPLICATION

(11) **EP 1 837 171 A1**
(43) Date of publication of application: **26.09.2007**
(21) Application number: 07104602.3
(22) Date of filing: 21.03.2007
(51) Int. Cl.: B31D 1/02, B23K 26/08

(54) **A label production apparatus**

(30) Priority: 22.03.2006 GB 0605694
(71) Applicant: A B Graphic International Limited, Middleton-on-the-Wolds, East Yorkshire YO25 9UQ (GB)
(72) Inventor: Lawson, David Millfield House, Driffield, East Yorkshire YO25 9UQ (GB)
(74) Representative: Walker, Antony James Alexander

(57) **Abstract**

A method for forming discrete self-adhesive labels from a label web (17) using a laser cutting apparatus in which the label web (17) is presented to a laser unit (23) with the self-adhesive side thereof facing the laser unit (23).

## Description

The present invention relates generally to adhesive labels and more particularly to a label production apparatus for forming discrete adhesive labels on a carrier sheet from a continuous label stock using a laser.

Adhesive labels are typically manufactured from rolls or strips of continuous label stock. The label stock comprises a label web or face stock having a front surface, which is usually printed on, and an adhesive coated rear surface which allows the label to be attached to a product. Underlying the label web is a carrier sheet or release liner. The carrier sheet is provided with a low adhesion surface contacting the label web which allows the label web to separate easily from the carrier sheet. This is important during the production of the adhesive labels from the label web as will be explained hereinbelow, and also facilitates removal of the finished adhesive labels from the carrier sheet for attachment to the products to be labelled. The inclusion of the carrier sheet prevents contamination of the adhesive surface, allows the label stock to be handled without accidental adherence to adjacent surfaces and provides structural integrity.

It is known to etch adhesive labels from a label web using a laser (hereinafter the term "etch" is used to signify laser ablation or vaporisation of the label stock). However, one disadvantage of using a laser is that the laser beam removes more material from the top of the label web than it does from the bottom. In other words the laser cut narrows as it progresses down through the label. This effect causes a chamfer around the edge of each label which is especially pronounced with thick labels. Indeed, where the underlying substrate of the label contrasts strongly with the front face of the label it can be noticeable to the eye.

It is an object of the present invention to provide a method for forming discrete self-adhesive labels from a label web using a laser which obviates or at least substantially mitigates the disadvantage referred to hereinabove.

According to one aspect of the present invention there is provided a method for forming discrete self-adhesive labels from a label web using a laser cutting apparatus characterised in that the label web is presented to a laser unit with the self-adhesive side thereof facing the laser unit.

According to another aspect of the present invention there is provided a label production apparatus for forming discrete self-adhesive labels from a continuous strip of label stock consisting of a self-adhesive label web and a carrier sheet, the apparatus comprising laser cutting means, means for de-laminating the self-adhesive label web from the carrier sheet, means for directing the label web past the laser cutting means to cut a label out of the label web and means for re-laminating the cut label web either to the original carrier sheet or to a new carrier sheet, characterised in that the apparatus further comprises means for directing the label web past the laser cutting means with the self adhesive side thereof facing the laser unit.

By directing the self-adhesive label web past the laser cutting unit with the self-adhesive side thereof facing the laser cutting unit the chamfering effect produced by the laser around the edge of each label is reversed. That is to say the chamfered edge extends inwardly from the front face of the label. As a consequence when the label is affixed to a product the chamfered edge thereof faces downwards towards the product and is obscured.

A further advantage of directing the self-adhesive label web past the laser cutting unit with the self-adhesive side thereof facing the laser cutting unit is that the label web can be supported on a moving platform as it passes the laser cutting unit without it adhering thereto. Whilst it is possible to use low adhesion materials for the transport surfaces of the label producing apparatus these are expensive and may still be prone to a build up of adhesive over time.

An embodiment of the present invention will now be described, by way of example, with reference to the accompanying drawings, in which:
Fig. 1 is a schematic view of a label production apparatus; and
Fig. 2 is a schematic view of a laser unit etching a label from a label web supported on a rotating drum and shows inset a detail of the etching action of the laser beam on the label web.

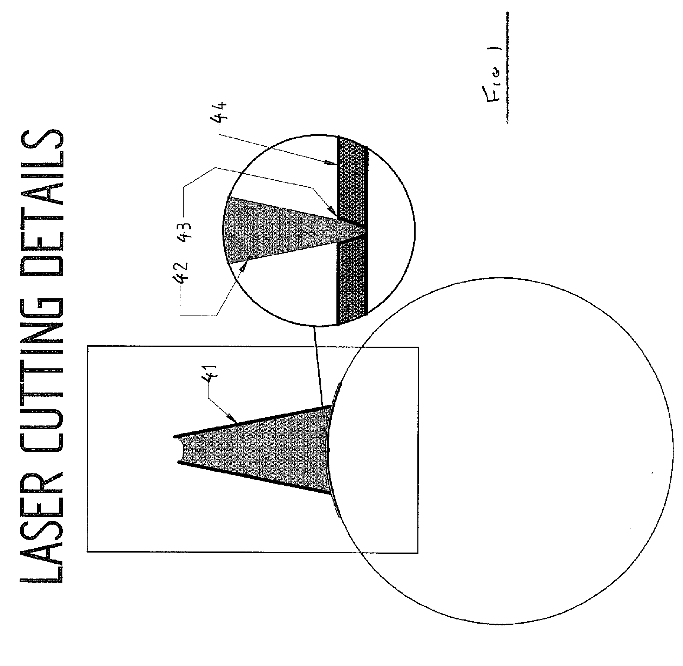

Referring to Fig. 1 of the drawings there is shown a label production apparatus for producing discrete self-adhesive labels from a continuous strip of label stock consisting of a self-adhesive label web having a front surface, which is usually printed on, and an adhesive rear surface, and a carrier sheet underlying and having one surface in contact with the adhesive surface of the self-adhesive label web. The label stock is input to the label forming apparatus on the right hand side thereof and is shown as a broken line 12.

The continuous strip of label stock 12 passes around tensioning and guide rollers 13, 14 and 15 and over a "peel" plate 16 where the self-adhesive label web, indicated by a broken line 17, is separated from the carrier sheet, indicated by a broken line 18. The self-adhesive label web 17 continues upwardly past the "peel" plate 16 and over the outer circumferential surface of a rotating drum 22. A laser unit 23 is positioned opposite the rotating drum 22 to cut labels from the label web 17 as it passes. The speed of rotation of the rotating drum 22 exactly matches the transport speed of the label web 17. Moreover, the rotating drum 22 is associated with vacuum means (not shown) which produces a vacuum at the outer circumferential surface of the drum 22 which vacuum serves to draw the label web 17 into close and secure engagement with the surface of the drum 22. As the label web 17 is held in close and secure engagement with the surface of the drum 22 and moves at the same speed as the drum 22 there is no need to tension it and stability is assured throughout its passage past the laser unit 23. This ensures accuracy of cutting by the laser unit 23 which results in labels of high quality. Furthermore, the labels cut from the label web remain fully supported and fixed in position within the surrounding matrix of waste material on the drum 22.

The carrier sheet 18 is directed downwardly from the peel plate, around guide and tensioning rollers 19, 20 and 21 and onto a first turn bar 31. The first turn bar 31 turns the carrier sheet 18 through 90° so that it lies in a vertical plane. From the first turn bar 31 the carrier sheet 18 continues across the front of the rotating drum 22 and onto a second turn bar 32 which reverses the carrier sheet 18 back through 90° so that it again lies in a horizontal plane. After passing around the second turn bar 32 the carrier sheet 18 passes around further guide and tensioning rollers 25, 26 and 27. After the last roller 27 the carrier sheet is directed around a tamping roller 28 and onto the surface of the rotating drum 22 where it re-joins the etched label web 17. The tamping roller 28 is positioned in close contact with the surface of the rotating drum 22. The tamping roller 28 presses the carrier sheet 18 against the self-adhesive side of the etched label web 17, thus re-laminating the one with the other to form an etched label stock, indicated by the dotted line 29. The etched label stock exiting the tamping roller 28, continues around tensioning and guide rollers 30, 31 and 32, and is then wound into a roll 34. Optionally, the waste matrix, indicated by a dotted line 36 may be separated from the etched label stock 29 and wound onto a separate roll 34.

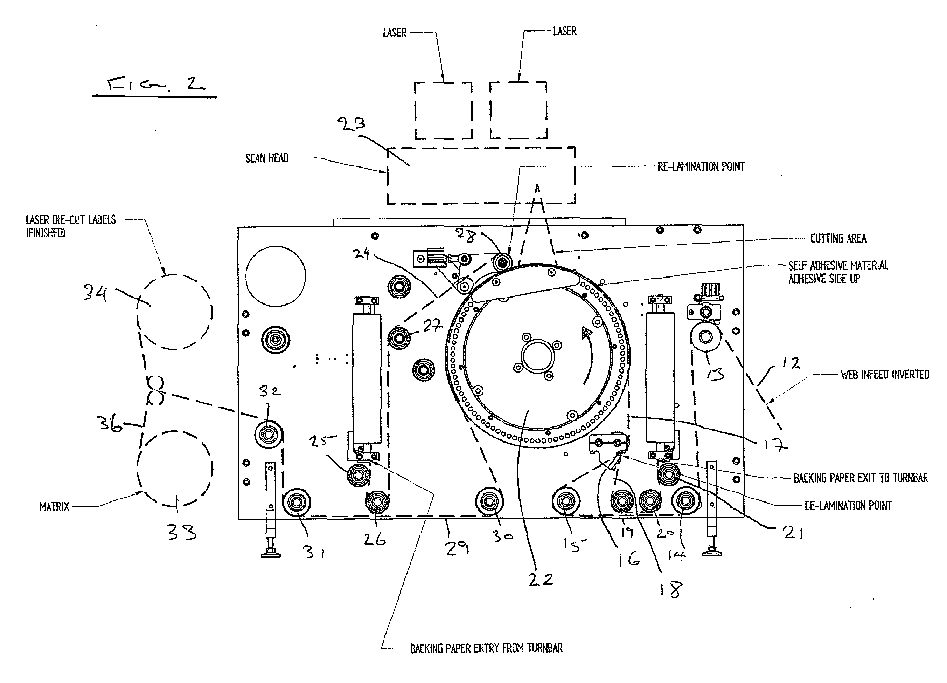

The self-adhesive label web 17 passes around the rotating drum 22 and past the laser unit 23 with the front face, that is to say the non-adhesive surface thereof, in contact with the drum 22. This ensures that the label web 17 does not adhere to any part of the apparatus as it passes between the de-lamination and re-lamination points defined by the peel plate 16 and the tamping roller 28. It is also beneficial from another standpoint. Referring to Fig. 2 of the drawings and, in particular, to the inset view therein, it can be seen that when a label web 44 is etched by a laser beam 42 more material is removed at the top surface of the label web 44 than at the bottom. As a result the sides of the label 43 are chamfered inwardly from the bottom to the top. This can cause them to be visible to the naked eye, particularly where the label web 44 is quite thick. By etching the label web through the adhesive side thereof, the chamfered edge is on the adhesive side and not on the front side, and hence is invisible when the label is applied to the surface of a product.

## Claims

1. A method for forming discrete self-adhesive labels from a label web using a laser cutting apparatus **characterised in that** the label web is presented to a laser unit with the self-adhesive side thereof facing the laser unit.

2. A label production apparatus for forming discrete self-adhesive labels from a continuous strip of label stock consisting of a self-adhesive label web and a carrier sheet, the apparatus comprising laser cutting means, means for de-laminating the self-adhesive label web from the carrier sheet, means for directing the label web past the laser cutting means to cut a label out of the label web and means for re-laminating the cut label web either to the original carrier sheet or to a new carrier sheet, **characterised in that** the apparatus further comprises means for directing the label web past the laser cutting means with the self-adhesive side thereof facing the laser unit.
